# EUROPEAN PATENT APPLICATION

(11) **EP 1 087 344 A2**
(43) Date of publication of application: **28.03.2001**
(21) Application number: 00203253.0
(22) Date of filing: 20.09.2000
(51) Int. Cl.: G07F 7/10

(54) **Activation codes with personal agents**

(30) Priority: 23.09.1999 US 155676 P
(71) Applicant: Citishare Corporation, New York, New York 11120 (US)
(72) Inventor: Hooper, William D., New Hope, PA 18938 (US)
(74) Representative: Hynell, Magnus

(57) **Abstract**

A method for modifying the accessibility of at least one feature of a financial services consumer software application. The method consists of providing a financial services consumer software application and controlling the accessibility of features of the application through use of activation codes. The subject application includes at least one feature having an activation status controlling the accessibility of the feature to an authorized user. The set of activation statuses of all available features for a particular user is uniquely related to an activation code. Modification of the activation code modifies said set of activation statuses, thereby modifying accessibility of at least one feature to an authorized user.

## Description

### Cross Reference to related Patent Applications

Applicants hereby claim priority to and hereby incorporate by reference copending U.S. Provisional Patent Application No. 60/155,676 filed September 23, 1999.

### Field of the Invention

The present invention relates to methods for performing data processing operations designed for or utilized in the processing of financial data. Specifically, the preferred embodiments of the present invention relate to the use of activation codes to control the functionality available in consumer-oriented financial services software applications and agents.

### Background

Over the last two decades, computer-based interaction between consumers and financial service providers has increased dramatically in quantity, variety, and sophistication. When combined with increased demand on an individual consumer's time and the ever-shortening period between upgrades in functionality of consumer-oriented financial services software, it is no wonder that useful features of such software applications often go unused by many who could benefit from them.

In an effort to offer a robust set of functionality, many software applications implement deep menu structures. Not only can this serve as a barrier to initial use for those not familiar with the application, but navigation through such structures becomes an irritant or disincentive to use for those who typically employ the software application for routine or periodic tasks. This problem is seen in both client-server and native applications.

As an example, transfer of funds from a checking account to a savings account is a typical routine task for many financial services consumers. Such transfer can involve navigation through several menu layers with interaction at each level in order to identify the consumer's account, the source sub-account, the amount to transfer, and the destination sub-account. For many consumers this interaction is preceded by and followed by a check on the balance of the source and destination sub-accounts to confirm the transfer. Each step requires navigation through and interaction with a number of menu layers.

Even when consumers become aware of and desire to use expanded functionality of consumer-oriented financial services software applications, the time and effort involved to obtain, install, configure, and learn to use expanded-capability versions of the application is often a deterrent to upgrading. In spite of the fairly common availability of relatively wide-bandwidth Digital Subscriber Line (DSL) and cable modem internet connections, upgrading native application software is often a non-trivial matter. Absent robust downloading programs, interrupted downloading requires the user to restart the download process upon a break in communications. In both native and client-server applications, the learning curve for expanded capabilities can often be steep and long.

Software agent technology is one approach with great promise to mitigate the burdens of complexity and volume presented by the burgeoning and rapidly changing use of software in consumer financial services. Software agents differ from conventional software in that they are typically long-lived, semi-autonomous, proactive, and adaptive. Sophisticated software agents can learn by one or more of several methods, for example: monitoring the user; receiving explicit direction from the user; and communicating with other agents to find how the other agents respond to similar circumstances. An agent with "learned" behavior can then: perform tasks on the user's behalf; train or teach the user; facilitate collaboration between users; and monitor events in real time. This paradigm of indirect management is in contrast to the direct management paradigm to which most applications adhere. Possible applications of software agent technology in consumer-oriented financial services software applications include: monitoring the effect of interaction sessions and recommending more efficient means to achieve the same result; automating periodic/routine interactions between the user and the application; streamlining menu offerings tailored to the user's habits; or offering new services based on past and current use.

While software agent technology may help mitigate some burdens presented by burgeoning and rapidly-changing consumer financial services software, the use of software agent technology leaves the burdens associated with the agents themselves not directly addressed, e.g., installing, configuring, and developing skill in use.

### Summary of the Invention

The preferred embodiments of the present invention include methods for modifying the accessibility of at least one feature of a financial services consumer software application through the use of activation codes and without requiring the user to download an entire new application program. Preferably, each feature of the application has a corresponding activation status controlling the accessibility of the feature to an authorized user. The activation status of each feature is an element of the set of activation statuses of all the features included in the application. For each user, each unique activation status set is uniquely related to an activation code. Modification of an activation code will modify the activation status set thereby modifying the activation status of at least one feature.

In one embodiment, modification of a user's activation code is conditioned upon occurrence or nonoccurrence of an event. In a further preferred embodiment of the present invention, a revised activation code is provided to an authorized user via electronic communications. In an alternative embodiment, the user receives the activation code and subsequently interacts with the financial services software application to reconfigure the application using the received activation code.

The above and other aspects, embodiments, features and benefits will be further appreciated based on the following discussion of the preferred embodiments of the invention.

### Brief Description of the Drawings

Preferred embodiments of present invention are shown by way of example and not limitation in the accompanying drawings in which:
Figure 1 illustrates a first connectivity scheme in a consumer financial services software application implemented in a client-server architecture;
Figure 2 illustrates a second connectivity scheme in a consumer financial services software application implemented in a client-server architecture; and

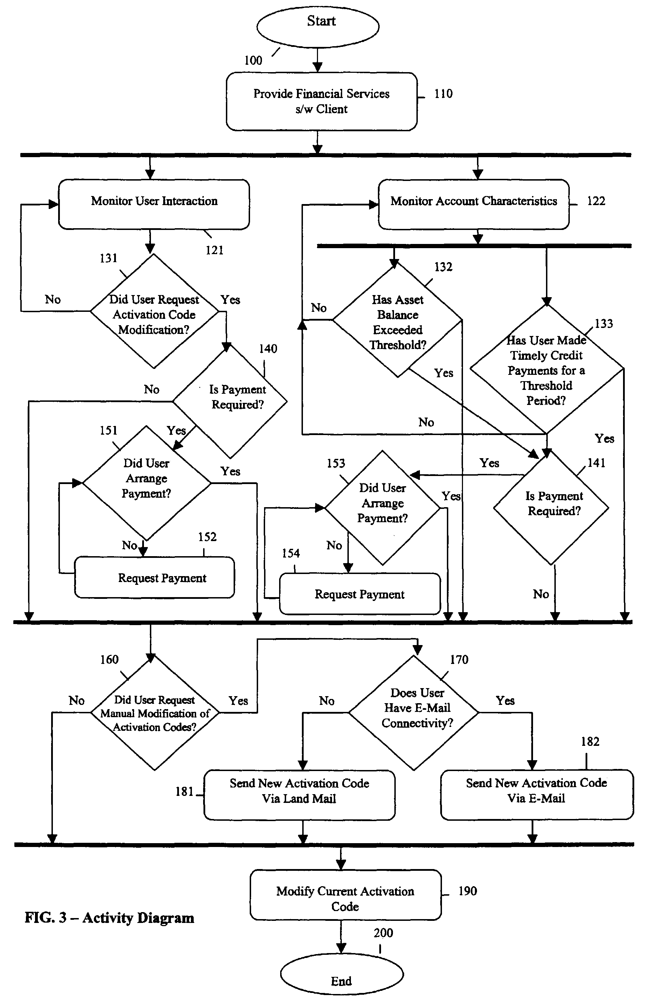

Figure 3 is an activity diagram illustrating an example implementation of operation of the present invention.

### Detailed Description of Preferred Embodiments of the Invention

In a preferred embodiment, the present invention is a method for modifying the accessibility of at least one feature of a financial services consumer software application without requiring the user to download an entire new application program.

In this embodiment, the financial services provider provides a financial services consumer software application to a user. The application may be either a native application or the client portion of a client-server application. The application may be provided either directly by the financial service provider or through a third party. The user may be the account holder or may be one authorized by the account holder to interact with the account. Typical features of such applications include, as some non-limiting examples: balance inquiry; check/draft history; transfers between sub-accounts; deposit history. More sophisticated features include, as some non-limiting examples: access to lines of credit, insurance services, investment services, trading simulations, and software agent capabilities.

Preferably, one or more features of the application, and preferably each feature, have a corresponding activation status controlling the accessibility of the feature to an authorized user. Preferably, the activation status of each feature is an element of the set of activation statuses of all the features included in the application. Table 1 shows one illustrative set of features found in applications such as Citigroup™'s myciti.com™ internet site, along with an example of a corresponding activation status for each feature in accordance with an embodiment of the current invention, and the resulting activation status set. It should be appreciated that other embodiments can contain various other features or sets of features.

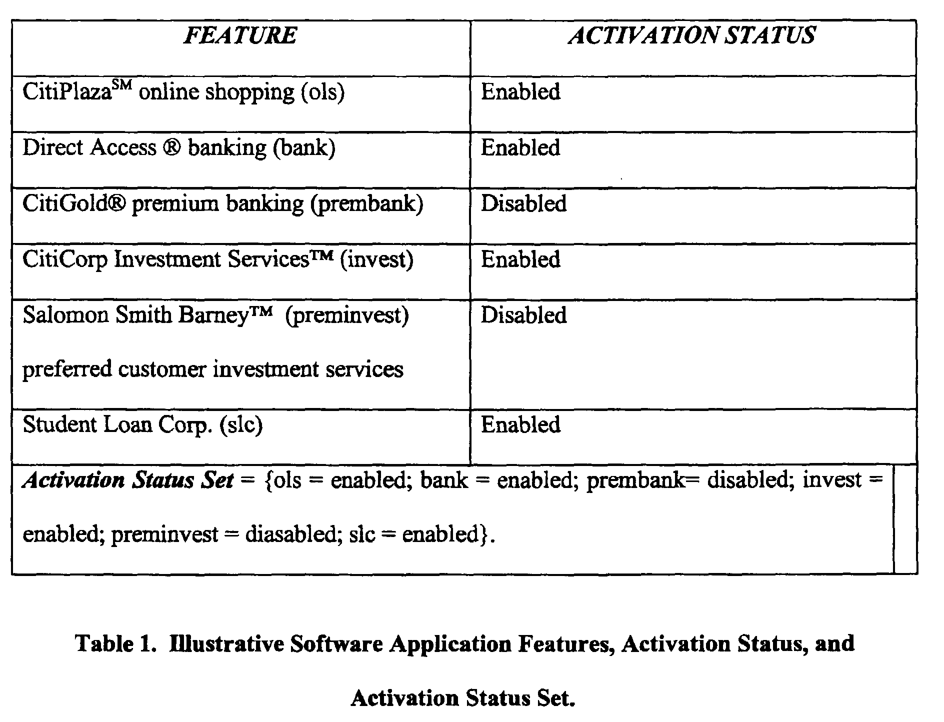

For each user, each unique activation status set is uniquely related to an activation code. The activation code does not need to contain the activation status set as embedded information, e.g., the activation code for a hypothetical user and the activation status set illustrated in Table 1 need not be of the format [〈*user ID*〉 11111000], but needs only to map to {〈*user ID*〉, 〈activation status set〉}.

In the illustrated embodiment, modification of a user's activation code will modify the activation status set thereby modifying the activation status of at least one feature. For example, with respect to an application characterized by the features of Table 1, a change in the activation code modifying the activation set to {ols = enabled; bank = enabled; prembank= **enabled**; invest = enabled; preminvest = disabled; slc = enabled} would enable activation for that user to premium banking features of the software application. This would occur without separately downloading a full-blown revised application program (but it may require downloading a small program such as a Java applet).

In a preferred example of the embodiment described above, modification of a user's activation code is conditioned upon the occurrence or non-occurrence of an event. For example, a sustained balance over a minimum amount for a required period of time (i.e., as an illustrative occurrence of an event) could trigger a change of activation code enabling premium banking services. As another example, the non-occurrence of an event, e.g., missing a loan payment, could also trigger a change of activation code, eliminating a user's access to premium services.

In another example of a preferred embodiment, payment or authorization for payment of a fee (i.e., as another illustrative occurrence of an event) could trigger modification of a user's activation code. Such payment may be at a customer service center, via mail, or other means established by the financial services provider including, in some examples: stored value card, debit card, credit card, smart card, electronic funds transfer, or electronic wallet.

In a further preferred embodiment of the present invention, a revised activation code is provided to an authorized user. Provision of the revised code to the user may be via electronic communications such as e-mail or by downloading. Downloading an activation code instead of a separate version of the application is quicker and less prone to error or interruption. Once the activation code is received at the user's computer, reconfiguration of the financial services application may be executed locally, thereby minimizing dependence on a sustained communications path between the user and the source of the activation code. Reconfiguration may be initiated with or without user intervention. One example of the latter situation is where the user is authorized activation to certain features for a limited period. Upon expiration of that period, the financial services provider initiates reconfiguration without user interaction. In another alternative, the user receives the activation code from either the financial services provider, or a third party authorized by the financial services provider to provide the activation code. In this alternative embodiment, the user subsequently interacts with the financial services software application to reconfigure the application using the received activation code.

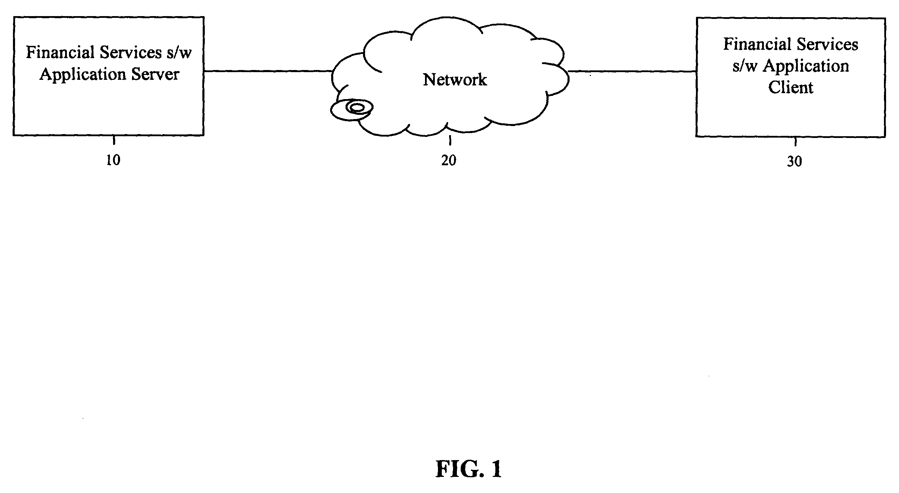

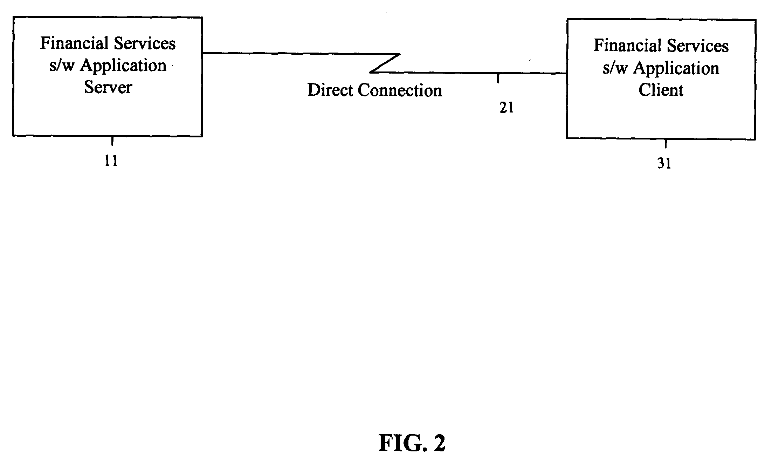

Figure 1 illustrates an example of connectivity between a consumer financial services provider and a user. In Figure 1, both the financial services software application server 10 and the application client 30 are connected to a network 20, e.g., the Internet or other computer network, and communicate via known protocols. In Figure 2, another example of connectivity between a consumer financial service provider and a user, the server 11 and client 31 are connected via a direct communications link 21 such as, for example, dial-up telephone line.

Figure 2 shows one illustrative and non-limiting preferred embodiment of the present invention combining several aspects discussed above. It should be appreciated that other embodiments can include only certain aspects or other aspects. As shown, subsequent to the *start* 100, the client portion of a client-server consumer financial services software application is *provided* 110 to an end user. After *providing* 110 the application, two concurrent activities, *monitor user interaction* 121 and *monitor account characteristics* 122 are initiated.

If, while *monitoring user interaction* 121, a *user request for activation code modification* 131 is detected, then an inquiry is made as to whether *payment is required* 140 for modifying the code. If *payment is required* 140 and the user did not *arrange* *payment* 151 then a *request for payment* 152 is communicated to the user. Until the user arranges for payment for those modifications that require such payment, the user will be prompted to arrange for payment.

If, while *monitoring account characteristics* 122, either *asset balance threshold has been exceeded* 132 or *user has timely made minimum credit payments for a threshold period* 133, the user will be eligible for activation code modification. As with the left-hand path 121, 131, 140, 151, 152 through the first stage of the activity diagram, a payment cycle 141, 153, 154 is implemented in the right-hand path.

At this point in this illustrative embodiment, any one of six conditions is sufficient to allow modification of the activation code:
- where the user requested a modification and no payment is required;
- where the user requested a modification, payment was required, and the user arranged for payment;
- where the user's asset balance has exceeded a threshold and no payment is required to modify the activation code;
- where the user's asset balance has exceeded a threshold, payment was required, and user arranged for payment;
- where the user has made timely credit payments for a threshold period and no payment was required to modify the activation code;
- where the user has made timely credit payments for a threshold period, payment was required, and user arranged for payment

If any one or more of these conditions is obtained, the next step in this illustrative embodiment is to determine whether the user *requested manual modification* 160 of the activation code. If not, the financial service provider can *modify the activation code* 190 via the communications link between the server and the client. If the user requested manual modification, then an inquiry is made to the user to determine *if e-mail connectivity exists* 182 between the financial services provider and the user. If such e-mail connectivity exists, then the financial services provider will *send the activation code via e-mail* 182. If such e-mail connectivity does not exist, then the financial services provider will *send the activation code via land mail* 181. Once in possession of the new activation code, the user can *modify the current activation code* 190, thereby bringing the process to an end 200.

In another preferred embodiment, activation codes are used to activate a personal financial agent. Upon activation, the agent accepts input from the user to, among other things: proactively monitor the user's account(s) and prevailing financial market conditions such as exchange and interest rates; proactively monitor changes in on-line services offered by financial service providers; integrate each of the user's on-line accounts, possibly from multiple service providers, into a single interface. The agent also provides an integrated income and balance sheet and recommends actions based on financial objectives set by the user. Those recommendations include suggestions for updating consumer financial services software features through the use of activation codes, and facilitating modification of such activation codes to enable the features.

While preferred embodiments of the invention have been described herein, those in the art would recognize that various other modifications, alternatives, and embodiments could be made by those in the art based on the present disclosure.

## Claims

1. A method for modifying the accessibility of at least one feature of a financial services consumer software application, the method comprising:
providing a financial services consumer software application, wherein, the application includes at least one feature, one or more of said features having an activation status,
the activation status of each one or more features controlling the accessibility of that feature to an authorized user,
the activation status of each one or more features being an element of the set of activation statuses;
each unique set of activation statuses for each user being uniquely related to an activation code, wherein modification of the activation code modifies the set of activation statuses.
modifying the activation code, thereby modifying the set of activation statuses, thereby modifying the activation status of at least one feature to modify the accessibility of that feature to a user.

2. The method as in Claim 1, wherein the modification of the activation code is conditioned upon the occurrence of an event.

3. The method as in Claim 2, wherein the event is payment on behalf of the user.

4. The method as in Claim 2, wherein the event is change in at least one characteristic of the subject account.

5. The method as in Claim 1, further comprising providing an activation code to an authorized user.

6. The method as in Claim 5, wherein the activation code is provided to the authorized user via electronic communications.

7. The method as in Claim 6, wherein the activation code is provided from the financial services institution.

8. The method as in Claim 6, wherein the activation code is provided from a 3^{rd} party on behalf of financial services institution.

9. The method as in Claim 5, wherein the modification of the activation code is accomplished by a user through interaction with the application.

10. The method as in Claim 3, wherein the payment is accomplished using a transaction card and a reader for such card connected to a personal computer.

11. The method as in Claim 3, wherein the payment is accomplished using electronic transfer.

12. The method as in Claim 3, wherein the payment is accomplished using an electronic wallet.

13. The method as in Claim 1, wherein at least one feature of the financial services consumer software application is a software agent.

14. A method for enabling modification of the accessibility of at least one feature of a financial services consumer software application, the method comprising:
providing a financial services consumer software application, wherein, the application includes at least one feature, each feature having an activation status,
the activation status of each feature controlling the accessibility of that feature to an authorized user,
the activation status of each feature being an element of the set of activation statuses of all features included in the application;
each unique set of activation statuses for each user being uniquely related to an activation code, wherein modification of the activation code modifies the set of activation statuses.
providing a different activation code, thereby directly enabling modification of the access code and indirectly enabling modification of the set of activation statuses, the activation status of at least one feature, and the accessibility of at the feature.

15. A computer system for enabling modification of accessibility of at least one feature of a software application, the computer system comprising:
a server programmed to provide, in combination with a client, at least one financial services feature to a user where accessibility to the feature is enabled by an activation code; and
at least one client programmed to provide, in combination with a server, at least one financial services feature to a user where accessibility to the feature is enable by the activation code.

16. A computer system for enabling modification of accessibility of at least one feature of a software application, the computer system comprising:
server means programmed to provide, in combination with a client, at least one financial services feature to a user where accessibility to the feature is enabled by an activation code; and
client means programmed to provide, in combination with a server, at least one financial services feature to a user where accessibility to the feature is enable by the activation code.
